# EUROPÄISCHE PATENTSCHRIFT

(11) **EP 0 981 465 B1**
(45) Veröffentlichungstag und Bekanntmachung des Hinweises auf die Patenterteilung: **08.08.2001**
(21) Anmeldenummer: 98930672.5
(22) Anmeldetag: 05.05.1998
(51) Int. Cl.: B60R 7/08

(54) **IN EIN FAHRZEUG EINBAUBARER BEHÄLTER ZUR BRILLENABLAGE**
SPECTACLE CASE BUILT INTO A VEHICLE
ETUI A LUNETTES SE FIXANT DANS UN VEHICULE

(30) Priorität: 15.05.1997 DE 19720364
(43) Veröffentlichungstag der Anmeldung: 01.03.2000
(73) Patentinhaber: fischerwerke Artur Fischer GmbH & Co. KG, 72178 Waldachtal (DE)
(72) Erfinder: PLOCHER, Bernd, D-72108 Rottenburg (DE); KARRER, Friedrich, D-72285 Pfalzgrafenweiler (DE); FUNK, Walter, D-72226 Simmersfeld (DE); SCHMIDT, Michael, D-71131 Jettingen (DE)
(86) Internationale Anmeldenummer: EP9802641
(87) Internationale Veröffentlichungsnummer: WO9851537

(56) Entgegenhaltungen:
- EP-A- 0 153 502
- WO-A-94/18032
- US-A- 2 927 685
- US-A- 4 469 365
- US-A- 4 576 320
- US-A- 5 403 058

## Beschreibung

Die Erfindung betrifft einen in ein Fahrzeug einbaubaren Behälter zur Brillenablage mit den Merkmalen des Oberbegriffs des Anspruchs 1.

Ein derartiger Behälter ist bekannt aus der EP 0 602 342 B1. Der bekannte Behälter dient dazu, eine Brille für einen Fahrer gut greifbar in einem Kraftwagen aufzubewahren. Die Aufbewahrung erfolgt staubfrei. Aus ästhetischen Gründen soll die Brille verdeckt aufbewahrt sein.

Der bekannte Behälter weist ein einseitig offenes Gehäuse auf, das in einem Kraftwagen beispielsweise am oder in einer Aussparung des Armaturenbretts anbringbar ist. Der bekannte Behälter weist einen schwenkbar am Gehäuse angebrachten Gehäusedeckel auf, der über ein Koppelglied mit einem im Gehäuse verschiebbar geführten Schlitten verbunden ist und diesen beim Öffnen des Gehäusedeckels zur offenen Seite des Gehäuses bewegt. Am Schlitten ist schwenkbar ein Aufnahmefach zum Einlegen einer Brille angebracht, das über eine Winkelhebel des Koppelglieds nach dem Verschieben des Schlittens aus einer zum Schlitten parallelen, liegenden Stellung in eine schräg zum Schlitten stehende Stellung verschwenkt wird. In dieser Schrägstellung des Aufnahmefachs läßt sich eine Brille einlegen oder entnehmen.

Der bekannte Behälter hat den Nachteil, daß er aufwendig aus einer Vielzahl an Einzelteilen zusammengesetzt ist. Weiterer Nachteil ist, daß die Brille lose im Behälter liegt, was zu Klappergeräuschen beim Fahren führt. Hinzu kommt, daß durch ständige Fahrzeugvibrationen die lose im Behälter einliegende Brille ständig am Aufnahmefach reibt, was zu Schleifspuren an der Brille und ihren Gläsern führt.

Der Erfindung liegt daher die Aufgabe zugrunde, einen Behälter der eingangs genannten Art so auszubilden, daß eine Brille in ihm klapperfrei aufbewahrt ist.

Diese Aufgabe wird erfindungsgemäß durch die Merkmale des Anspruchs 1 gelöst. Der erfindungsgemäße Behälter weist ein schachtelförmiges, vorzugsweise an einer seiner beiden großen Seiten offenes Gehäuse auf, das mit einem schwenkbar angebrachten Gehäusedeckel verschließbar ist. Der Gehäusedeckel ist zugleich als Aufnahmefach für eine in ihn einlegbare Brille ausgebildet. Ein im Gehäuse angebrachtes elastisches Band drückt eine in den Gehäusedeckel eingelegte Brille bei geschlossenem Gehäusedeckel gegen dessen Innenseite, so daß die Brille festgeklemmt ist. Dadurch wird vermieden, daß sich die Brille im geschlossenen Behälter bewegt und Klappergeräusche verursacht. Da die Klemmung Relativbewegungen zwischen Brille und Behälter unterbindet, werden Schleifspuren an der Brille vermieden. Weiterer Vorteil ist, daß der Behälter im wesentlichen nur aus drei Teilen, nämlich dem Gehäuse, dem Gehäusedeckel und dem elastischen Band besteht.

In bevorzugter Ausgestaltung der Erfindung ist das elastische Band als Gummiband ausgebildet, das bei geschlossenem Gehäusedeckel in etwa parallel mit oder auch ohne Abstand zum Gehäusedeckel im Gehäuse verläuft. Beim Schließen nähert sich der Gehäusedeckel dem elastischen Band so weit, daß ein Zwischenraum zwischen dem Gehäusedeckel und dem elastischen Band enger wird als die Brille dick ist. Eine in den Gehäusedeckel eingelegte Brille wird dadurch bei geschlossenem Gehäusedeckel vom elastischen Band gegen die Innenseite des Gehäusedeckels gedrückt und somit zwischen dem Gehäusedeckel und dem elastischen Band festgeklemmt. Beim Öffnen entfernt sich der Gehäusedeckel vom Band, so daß die Klemmung aufgehoben und die Brille dem ein Aufnahmefach für die Brille bildenden Gehäusedeckel entnehmbar ist. Das elastische Band ist beim Entnehmen und Einlegen der Brille nicht im Weg. Diese Ausgestaltung der Erfindung ergibt auf einfache Weise eine Klemmung der Brille. Zudem ist das elastische Band brillenschonend.

Bei einer Weiterbildung der Erfindung ist ein Ende des Bandes am Gehäuse und ein anderes Ende des Bandes am Gehäusedeckel angebracht, so daß das Band als Zugfederelement wirkt, das den Gehäusedeckel verschwenkt. Die Anbringung des Bandes kann so erfolgen, daß es den Gehäusedeckel in seine offene Stellung oder in seine geschlossene Stellung zieht. Auch ist es möglich, das elastische Band so am Gehäuse und am Gehäusedeckel anzubringen, daß es beim Verschwenken des Gehäusedeckels aus der geschlossenen in die offene Stellung und umgekehrt eine Schwenkachse des Gehäusedeckels quert. Auf diese Weise läßt sich erreichen, daß, wie beispielsweise vom Klappständer eines Zweirades an sich bekannt, das elastische Band nach queren der Schwenkachse des Gehäusedeckels in Öffnungsrichtung den Gehäusedeckel in die offene Stellung und nach queren der Schwenkachse in Schließrichtung den Gehäusedeckel in die geschlossene Stellung zieht und dadurch den Gehäusedeckel sowohl in der offenen als auch in der geschlossenen Stellung hält. Durch die Verwendung des elastischen Bandes als Zugfederelement wird ein zusätzliches Antriebselement zum Verschwenken des Gehäusedeckels eingespart.

Eine Ausgestaltung der Erfindung weist einen Brillenhalter auf, der mit Abstand vom Gehäusedeckel auf dessen Innenseite angebracht ist, so daß die Brille in einen Zwischenraum zwischen dem Brillenhalter und dem Gehäusedeckel einsteckbar ist. Bei einer Weiterbildung dieser Ausgestaltung der Erfindung weist der Brillenhalter Freiräume im Bereich von Brillenscharnieren einer in den Gehäusedeckel eingelegten Brille auf. Dadurch ist es möglich, die Brille mit geöffneten Brillenbügeln in den Gehäusedeckel einzulegen und erst danach zu schließen, d. h. an das Brillengestell anzulegen. Die geschlossenen Brillenbügel befinden sich auf einer dem Gehäusedeckel abgewandten Außenseite des Brillenhalters. Das elastische Band bzw. das Federelement greift nach dem Schließen des Behälters an den geschlossenen Brillenbügeln an und drückt diese in Anlage an das Brillengestell, so daß die Brille mit samt ihrer Brillenbügel zwischen dem elastischen Band und dem Gehäusedeckel festgeklemmt ist. Diese Ausgestaltung der Erfindung hat den Vorteil, daß eine Brille abgenommen und mit geöffneten, also vom Brillengestell abstehenden Brillenbügeln in den Gehäusedeckel einlegbar ist. Die Brille braucht zum Schließen der Brillenbügel nicht mit einer Hand gehalten zu werden, da sie im Gehäusedeckel fixiert ist. Dies gilt entsprechend auch für das Entnehmen der Brille aus dem Behälter und dem Aufsetzen.

Bei einer Ausgestaltung der Erfindung weist der Gehäusedeckel eine Stütze für den Nasenbügel der in ihn einzulegenden Brille auf. Des weiteren ist eine Auflage vorgesehen, auf der das Brillengestell einer eingelegten Brille mit einem unteren Rand, also an einer Stelle des Umfangs von Brillengläsern aufliegt. Der Abstand zwischen der Stütze für den Nasenbügel und die Auflage für das Brillengestell ist einstellbar, um den erfindungsgemäßen Behälter an unterschiedliche Brillen anpassen zu können.

Bei einer Ausgestaltung der Erfindung ist eine entriegelbare Rasteinrichtung vorgesehen, die den Gehäusedeckel in seiner geschlossenen Stellung verriegelt. Durch Betätigung der Rasteinrichtung läßt sich der Gehäusedeckel öffnen oder wird vom elastischen Band aufgeschwenkt. Die Schwenkbewegung wird vorzugsweise mittels eines Dämpfungselements gedämpft.

Die Erfindung wird nachfolgend anhand eines in der Zeichnung dargestellten Ausführungsbeispiels näher erläutert. Es zeigen:
- Figur 1: eine Explosionsdarstellung der Einzelteile eines erfindungsgemäßen Behälter;
- Figur 2: eine perspektivische Darstellung des geöffneten Behälters aus Figur 1;
- Figur 3: einen Schnitt des geöffneten Behälters aus Figur 1; und
- Figur 4: einen Schnitt des geschlossenen Behälters aus Figur 1.

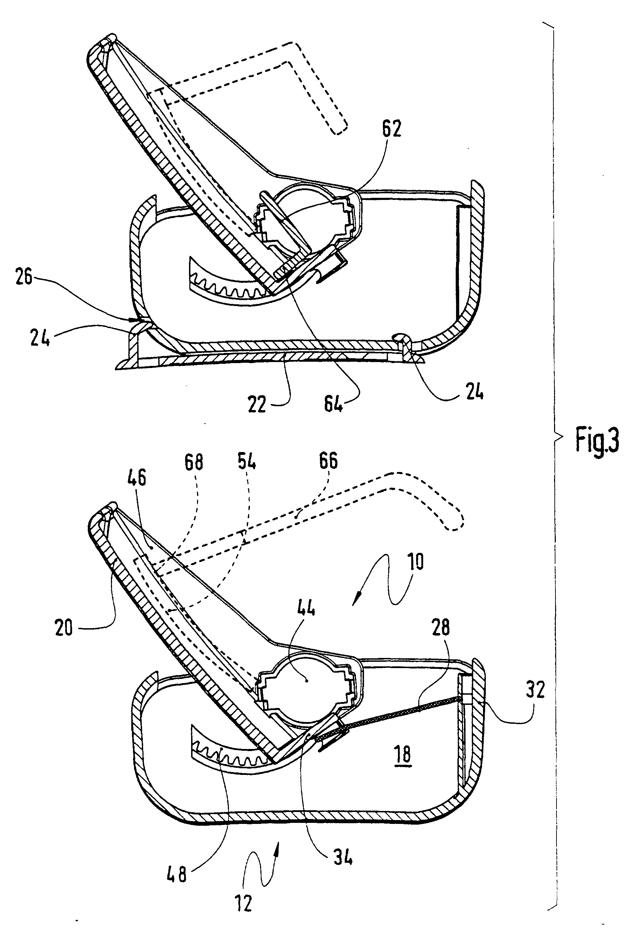

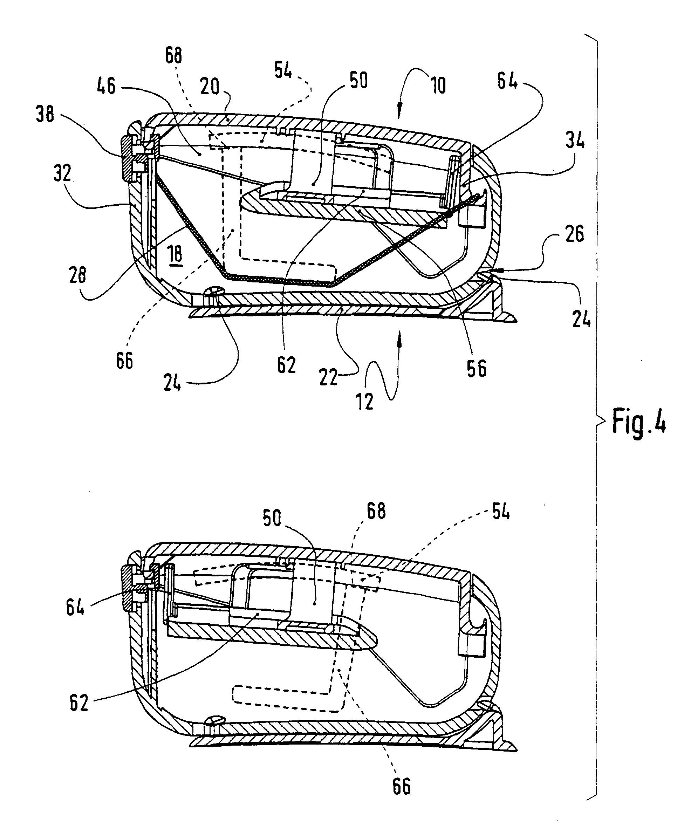

Der in der Zeichnung dargestellte, insgesamt mit 10 bezeichnete Behälter zur Brillenablage weist ein schachtelförmiges Gehäuse 12 mit offener Oberseite auf. Am Gehäuse 12 ist ein Gehäusedeckel 20 mittels seitlich abstehender Schwenkzapfen 14, die in Lagerlöchern 16 an oberen Rändern von Seitenwänden 18 des Gehäuses 12 einliegen, schwenkbar angebracht. Zur Befestigung des Behälters 10 ist eine Befestigungsplatte 22 an seiner Unterseite vorgesehen, die zum Befestigen beispielsweise durch Kleben oder Anschrauben an einem Armaturenbrett oder dgl. eines Kraftwagens vorgesehen ist. Die Befestigungsplatte 22 weist vier nach oben stehende Rastelemente 24 auf, die zum Eingriff in Aussparungen 26 des Gehäuses 12 vorgesehen sind (vgl. Figuren 3 und 4). Nach Anbringung der Befestigungsplatte 22 am Armaturenbrett oder dgl. wird das Gehäuse 12 auf die Befestigungsplatte 22 niedergedrückt, so daß deren Rastelemente 24 in den Aussparungen 26 des Gehäuses 12 in Eingriff gelangen und das Gehäuse 12 halten.

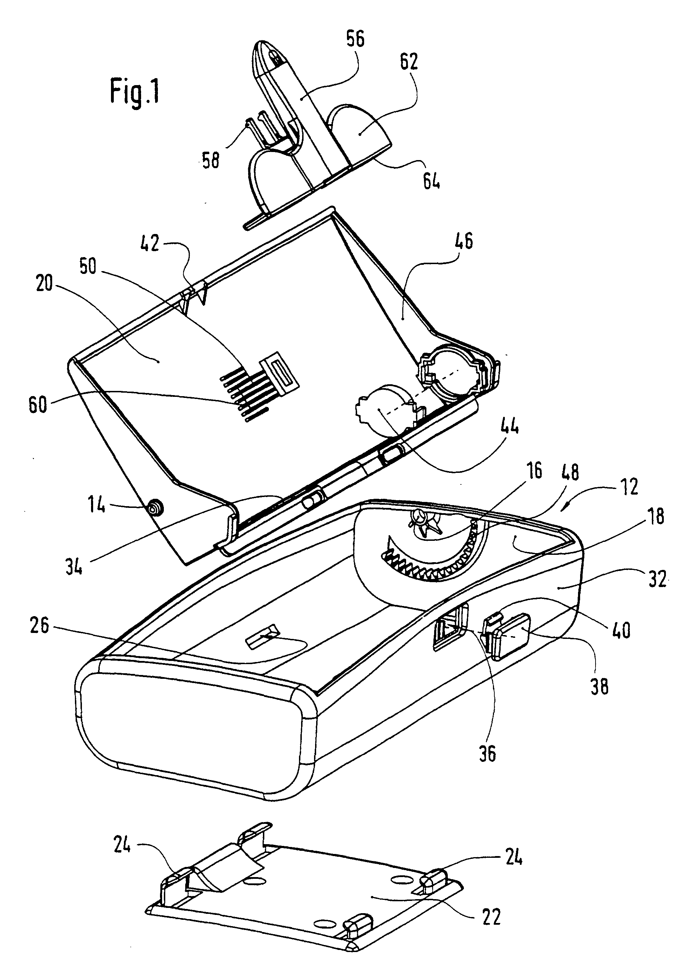

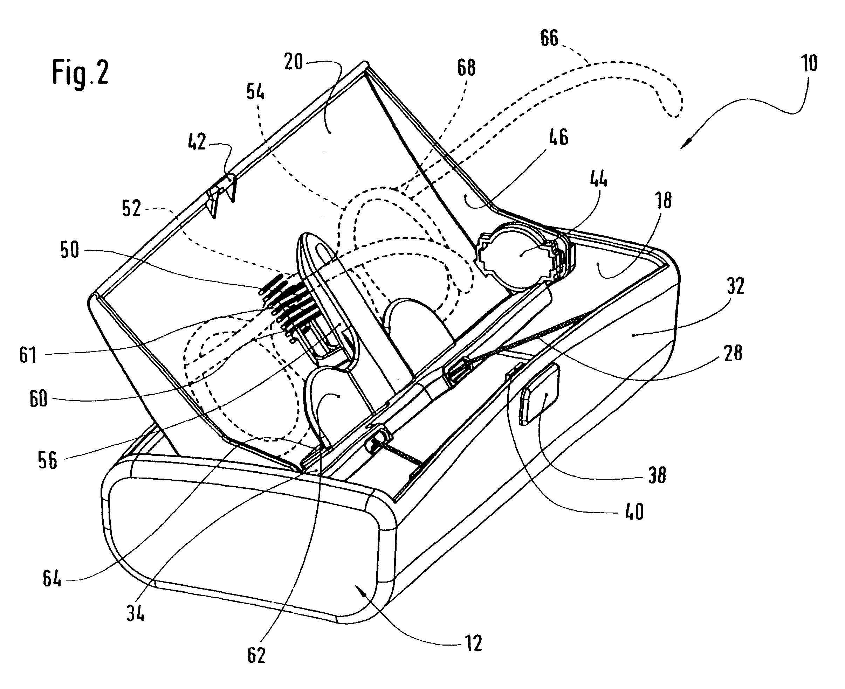

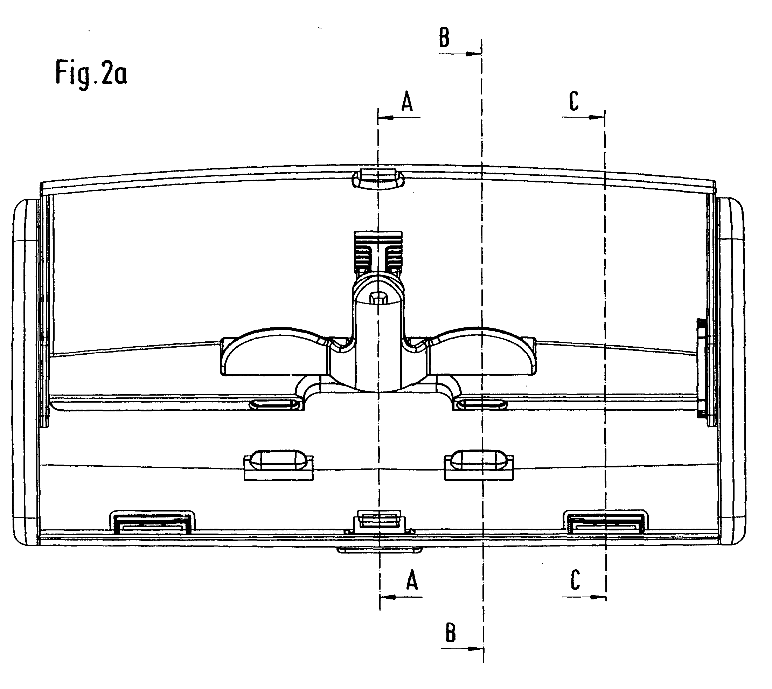

Parallel zu den Seitenwänden 18 sind zwei Gummibänder 28 im Gehäuse 12 angebracht, die einen Abstand von den Seitenwänden 18 des Gehäuses 12 haben, der etwa ¼ der Breite des Gehäuses 12 entspricht (die Gummibänder 28 sind in Figur 1 nicht eingezeichnet). Die Gummibänder 28 sind mit Klemmelementen 30 an einer Innenseite einer Vorderwand 32 des Gehäuses 12 angebracht. Sie erstrecken sich von einem oberen Rand der Vorderwand 32 zu einem unteren Rand einer Rückwand 34 des Gehäusedeckels 20, an der sie ebenfalls festgelegt sind. Die Gummibänder 28 befinden sich in jeder Stellung des Gehäusedeckels 20 unterhalb einer von den Schwenkzapfen 14 und den Lagerlöchern 16 definierten Schwenkachse, d. h. sie ziehen den Gehäusedeckel 20 in eine geöffnete Stellung, wie sie in Figuren 2 und 3 dargestellt ist.

Um den Gehäusedeckel 20 in einer geschlossenen Stellung zu halten, wie sie in Figur 4 dargestellt ist, ist in einer Ausnehmung 36 der Vorderwand 32 des Gehäuses 12 ein Verriegelungselement 38 federnd eindrückbar eingesetzt, das einen Verriegelungshaken 40 aufweist, der bei geschlossenem Gehäusedeckel 20 mit einem Verriegelungshaken 42 am vorderen Rand des Gehäusedeckels 20 in Eingriff steht und dadurch den Gehäusedeckel 20 geschlossen hält. Zum Entriegeln wird das Verriegelungselement 38 eingedrückt, so daß die beiden Verriegelungshaken 40, 42 außer Eingriff gelangen, woraufhin die beiden Gummibänder 28 den Gehäusedeckel 20 aufziehen (das Verriegelungselement 38 ist der klaren Darstellung wegen in den Figuren 3 und 4 nicht eingezeichnet).

Die Schwenkbewegung des Gehäusedeckels 20 wird von einem an sich bekannten Rotationsdämpfungselement 44 gedämpft, das in eine Seitenwand 46 des Gehäusedeckels 20 eingesetzt ist und dessen in der Zeichnung nicht sichtbares Zahnrad mit einer Zahnstange 48 kämmt, die einstückig mit der Seitenwand 18 des Gehäuses 12 ist und in einem Kreisbogen um das Lagerloch 16 für den Schwenkzapfen 14 des Gehäusedeckels 20 angeordnet ist.

Der Gehäusedeckel 20 bildet ein Aufnahmefach zum Einlegen einer Brille 54. Er weist eine mit ihm einstückige, von seiner Innenseite abstehende Stütze 50 für den Nasenbügel 52 einer in den Figuren 2 bis 4 mit Strichlinien dargestellten Brille 54 auf. An der Stütze 50 ist ein Brillenhalter 56 verschiebbar und mit Abstand vom Gehäusedeckel 20 angebracht, der mittels einer Rasteinrichtung 58, 60 in Stufen verstellbar ist. An einem der Rückwand 34 des Gehäusedeckels 20 zugewandten Ende weist der Brillenhalter 56 seitlich abstehende Halteflügel 62 sowie rechtwinklig von diesen abstehende Auflagen 64 auf. Die Auflagen 64 sind zum Abstützen eines Gestells der Brille 54 an dessen unterem Rand vorgesehen (vgl. Figuren 3 und 4). Durch die Verschiebbarkeit des Brillenhalters 56 läßt sich der Abstand der Auflagen 64 von der Stütze 50 für den Nasenbügel 52 der Brille 54 verstellen und dadurch an verschiedene Brillen 54 anpassen.

Die Funktion des erfindungsgemäßen Behälters 10 zur Brillenablage ist folgende: Bei geöffnetem Behälter 10 wird die Brille 54 mit ihrem Gestell und ihren Gläsern in einen Zwischenraum zwischen dem Brillenhalter 56 und dem Gehäusedeckel 20 eingeschoben. Der Nasenbügel 52 gelangt dabei ebenfalls in den Zwischenraum zwischen dem stiftförmigen Brillenhalter 56 und dem Gehäusedeckel 20, er liegt auf der Stütze 50 des Gehäusedeckels 20 auf. Brillengläser befinden sich teilweise zwischen dem Gehäusedeckel 20 und den Halteflügeln 62 des Brillenhalters 56.

Der Brillenhalter 56 weist seitlich und oberhalb seiner Halteflügel 62 ausreichend Freiraum im Bereich der Brillenscharniere 68 auf, um die Brillenbügel 66 der zwischen dem Brillenhalter 56 und dem Gehäusedeckel 20 eingesteckten Brille 54 verschwenken zu können. Die Brille 54 kann, wie in Figur 2 angedeutet, mit geöffneten, d. h. vom Brillengestell 54 abstehenden Brillenbügeln 66 in den Gehäusedeckel 20 eingelegt werden. Erst nach dem Einlegen der Brille 54 in den Gehäusedeckel 20 werden die Brillenbügel 66 geschlossen d. h. in Anlage an das Brillengestell verschwenkt. Sie übergreifen dabei den stiftförmigen Brillenhalter 56 auf dessen dem Gehäusedeckel 20 abgewandter Seite (Figur 3). Der Brillenhalter 56 gibt der Brille 54 ausreichend Halt zum Schließen der Brillenbügel 66, ohne daß das Brillengestell von Hand gehalten werden muß. Die Brillenbügel 66 lassen sich problemlos mit einer Hand schließen. Dasselbe gilt entsprechend für das Entnehmen der Brille 54: Die Brillenbügel 66 können geöffnet werden bevor die Brille 54 dem Gehäusedeckel 20 entnommen wird, wobei der Brillenhalter 56 dem Brillengestell Halt gibt, um die Brillenbügel 66 mit einer Hand öffnen zu können.

Nach dem Einlegen der Brille 54 in den Gehäusedeckel 20 und dem Schließen der Brillenbügel 66 (diese Stellung ist in Figur 3 dargestellt), wird der Gehäusedeckel 20 gegen den Zug der Gummibänder 28 geschlossen, wobei er am Verriegelungselement 38 einrastet. Die Gummibänder 28 überspannen die Brille 54 an ihren Brillenbügeln 66 und drücken sie gegen die Innenseite des Gehäusedeckels 20. Auf diese Weise ist die Brille 54 bei geschlossenem Behälter 10 im Gehäusedeckel 20 festgeklemmt und verursacht keine Klappergeräusche.

Zur Entnahme der Brille 54 wird das Entriegelungselement 38 eingedrückt, woraufhin der Gehäusedeckel 20 durch das Dämpfungselement 44 gedämpft aufschwenkt und die Brille 54 nach Öffnen der Brillenbügel 66 entnommen werden kann.

## Patentansprüche

1. In ein Fahrzeug einbaubarer Behälter (10) zur Brillenablage, mit einem einseitig offenen Gehäuse (12) und mit einem Gehäusedeckel (20), der in eine offene Stellung und in eine geschlossene Stellung schwenkbar am Gehäuse (12) angebracht ist, **dadurch gekennzeichnet**, daß der Gehäusedeckel (20) als Aufnahmefach zum Einlegen einer Brille (54) ausgebildet ist, und daß im Gehäuse (12) wenigstens ein elastisches Band (28) angebracht ist, in dessen Richtung der Gehäusedeckel (20) beim Schließen verschwenkt, so daß das elastische Band (28) eine eingelegte Brille (54) gegen eine Innenseite des Gehäusedeckels (20) drückt.

2. Behälter nach Anspruch 1, **dadurch gekennzeichnet,** daß das elastische Band (28) ein Gummiband ist, das bei geschlossenem Gehäusedeckel (20) in etwa parallel zum Gehäusedeckel (20) im Gehäuse (12) verläuft.

3. Behälter nach Anspruch 2, **dadurch gekennzeichnet,** daß ein Ende des Bandes (28) am Gehäuse (12) und ein anderes Ende des Bandes (28) am Gehäusedeckel (20) angebracht ist und als Zugfederelement wirkt, das den Gehäusedekkel (20) verschwenkt.

4. Behälter nach Anspruch 1, **dadurch gekennzeichnet**, daß der Gehäusedekkel (20) einen Brillenhalter (56) aufweist, der mit Abstand vom Gehäusedeckel (20) an der Innenseite des Gehäusedeckels (20) angebracht ist, so daß die Brille (54) in einen Zwischenraum zwischen dem Brillenhalter (56) und dem Gehäusedeckel (20) einsteckbar ist.

5. Behälter nach Anspruch 4, **dadurch gekennzeichnet,** daß der Brillenhalter (56) Freiräume im Bereich von Brillenscharnieren (68) aufweist, so daß die Brille (54) mit geöffneten Brillenbügeln (66) in den das Aufnahmefach bildenden Gehäusedeckel (20) einlegbar ist.

6. Behälter nach Anspruch 1, **dadurch gekennzeichnet**, daß der Gehäusedekkel (20) eine Stütze (50) für den Nasenbügel (52) der Brille (54) und eine Auflage (64) für ein Brillengestell am Umfang der Brillengläser aufweist, wobei ein Abstand der Auflage (64) an der Stütze (50) einstellbar ist.

7. Behälter nach Anspruch 1, **dadurch gekennzeichnet,** daß der Behälter (10) eine entriegelbare Rasteinrichtung (38, 40, 42) aufweist, die den Gehäusedeckel (20) in seiner geschlossenen Stellung hält.

8. Behälter nach Anspruch 1, **dadurch gekennzeichnet,** daß der Behälter (10) ein Dämpfungselement (44) aufweist, das eine Schwenkbewegung des Gehäusedeckels (20) dämpft.

## Claims

1. Container (10) for storing spectacles and for building into a vehicle, having a housing (12) that is open at one side and a housing lid (20) which is attached to the housing (12) so as to be pivotable into an open position and into a closed position, **characterised in that** the housing lid (20) is in the form of a receiving compartment for the insertion of a pair of spectacles (54), and at least one elastic band (28) is mounted in the housing (12), towards which band the housing lid (20) pivots on closure so that the elastic band (28) presses an inserted pair of spectacles (54) against an inner side of the housing lid (20).

2. Container according to claim 1, **characterised in that** the elastic band (28) is a rubber band which, when the housing lid (20) is closed, extends in the housing (12) approximately parallel with the housing lid (20).

3. Container according to claim 2, **characterised in that** one end of the band (28) is attached to the housing (12) and another end of the band (28) is attached to the housing lid (20) and acts as a tension spring element that pivots the housing lid (20).

4. Container according to claim 1, **characterised in that** the housing lid (20) has a spectacle holder (56), which is mounted on the inside of the housing lid (20) spaced from the housing lid (20) so that the spectacles (54) can be inserted into the space between the spectacle holder (56) and the housing lid (20).

5. Container according to claim 4, **characterised in that** the spectacle holder (56) has free spaces in the region of spectacle hinges (68) so that the spectacles (54) can be inserted into the housing lid (20) that forms the receiving compartment with their spectacle arms (66) open.

6. Container according to claim 4, **characterised in that** the housing lid (20) has a rest (50) for the nose bridge (52) of the spectacles (54) and a support (64) for a spectacle frame at the circumference of the spectacle lenses, the distance between the support (64) and the rest (50) being adjustable.

7. Container according to claim 1, **characterised in that** the container (10) has a catch device (38, 40, 42) that can be unlocked, which holds the housing lid (20) in its closed position.

8. Container according to claim 1, **characterised in that** the container (10) has a damping element (44) which damps pivoting movement of the housing lid (20).

## Revendications

1. Compartiment (10) pour lunettes encastrable dans un véhicule, comprenant un boîtier (12) ouvert sur un côté et un couvercle de boîtier (20), qui est assemblé contre le boîtier (12) de manière à pouvoir pivoter vers une position d'ouverture et une position de fermeture, caractérisé en ce que le couvercle du boîtier (20) est conçu sous forme de réceptacle destiné à recevoir une paire de lunettes (54), et en ce qu'au moins une bande élastique (28) est fixée dans le boîtier (12), en direction de laquelle le couvercle de boîtier (20) pivote pendant le mouvement de fermeture, de telle sorte que la bande élastique (28) serre une paire de lunettes (54) insérée dans le couvercle du boîtier (20) contre la face intérieure de celui-ci.

2. Compartiment selon la revendication 1, caractérisé en ce que la bande élastique (28) est une bande en caoutchouc qui est orientée dans le boîtier (12) presque parallèlement au couvercle du boîtier (20) lorsque le couvercle du boîtier (20) est fermé.

3. Compartiment selon la revendication 2, caractérisé en ce qu'une extrémité de la bande (28) est fixée contre le boîtier (12) et l'autre extrémité de la bande (28) contre le couvercle du boîtier (20) et agit comme un élément à ressort de traction, qui fait pivoter le couvercle du boîtier (20).

4. Compartiment selon la revendication 1, caractérisé en ce que le couvercle du boîtier (20) comprend un porte-lunettes (56) qui est monté sur la face intérieure du couvercle du boîtier (20) à une distance donnée du couvercle du boîtier (20), de telle sorte que les lunettes (54) peuvent être insérées dans un espace compris entre le porte-lunettes (56) et le couvercle du boîtier (20).

5. Compartiment selon la revendication 4, caractérisé en ce que le porte-lunettes (56) comporte des espaces libres dans la zone des charnières (68) de la monture de lunettes, de telle sorte que la paire de lunettes (54) peut être déposée avec les branches de la monture (66) ouvertes dans le couvercle du boîtier (20) formant réceptacle.

6. Compartiment selon la revendication 1, caractérisé en ce que le couvercle du boîtier (20) comporte un support (50) destiné à recevoir le pont (52) de la paire de lunettes (54) et une surface d'appui (64) pour une monture de lunettes au niveau du contour des verres de lunettes, la distance de la surface d'appui (64) sur le support (50) étant réglable.

7. Compartiment selon la revendication 1, caractérisé en ce que le compartiment (10) comporte un dispositif de verrouillage (38, 40, 42) susceptible d'être débloqué, lequel maintient le couvercle du boîtier (20) dans sa position de fermeture.

8. Compartiment selon la revendication 1, caractérisé en ce que le compartiment (10) comporte un élément d'amortissement (44) qui amortit le mouvement de pivotement du couvercle du boîtier (20).
